(19) Europäisches Patentamt
European Patent Office
Office européen des brevets

(11) **EP 3 329 773 B1**

(12) **EUROPEAN PATENT SPECIFICATION**

(45) Date of publication and mention
of the grant of the patent:
**12.01.2022  Bulletin 2022/02**

(51) Int Cl.:
***A01M 21/04*** *(2006.01)*

(21) Application number: **17204719.3**

(22) Date of filing: **30.11.2017**

(54) **APPARATUS AND METHOD FOR CONTROLLING WEEDS**

VORRICHTUNG UND VERFAHREN ZUR BEKÄMPFUNG VON UNKRAUT

APPAREIL ET PROCÉDÉ DE CONTRÔLE DE MAUVAISES HERBES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2016  NL 2017899**

(43) Date of publication of application:
**06.06.2018  Bulletin 2018/23**

(73) Proprietor: **Waterkracht B.V.
7051 HS Varsseveld (NL)**

(72) Inventor: **GILBERS, Johannes Gerhardus
7051 HS Varsseveld (NL)**

(74) Representative: **V.O.
P.O. Box 87930
Carnegieplein 5
2508 DH Den Haag (NL)**

(56) References cited:
**EP-A1- 1 588 615      WO-A1-2012/063060
WO-A1-2013/093495      WO-A2-2004/089075
GB-A- 2 332 849**

**Description**

The invention relates to an apparatus for controlling weeds. The invention moreover relates to a method for controlling weeds.

For controlling weeds different methods and systems can be used, such as mechanical removal by using a hoe, or by using rotating steel brushes or the like, or by using weed killers. Mechanical means are relatively slow and labor intensive, and hence costly. Moreover they can easily lead to damage to surfaces being treated. Moreover these methods often only remove visible parts of weeds but not necessarily the roots, which means that the weeds can grow back easily again. Chemical treatment may be effective but is unsatisfactory, for example because of potential health problems and environmental hazards. Moreover weeds may become immune to chemical weed killers, whereas such chemical products may be costly. Alternative methods are known using heat, for example burners to burn weeds from surfaces. These methods can be effective but not without hazards. For example using burners can lead to damages to the surface treated and can lead to fire hazards. Furthermore these methods can be costly.

Furthermore it is known to control weeds using hot liquid, such as hot water. Sprayed onto the surface on which weeds need to be controlled. For example in GB2332849 a tractor supported weed control system is described in which water is preheated in a storage tank and then supplied to a nozzle or a series of nozzles through which the water is sprayed onto weeds to be controlled. Between the storage tank and the nozzle or nozzles a flow through water heating device is provided, operated by a drive shaft of the tractor, in which flow through water heating device the water is super heated to temperatures well above boiling temperature, such as 600 to 700°C, before being sprayed.

NL1018458 discloses an apparatus and method for controlling weeds using hot water, in which water is heated in a flow through heat exchanger and then sprayed onto a surface to be treated. A layer of foam can be provided over the sprayed surface in order to prolong the heating of the surface.

EP1588615 furthermore discloses an apparatus and method for controlling weeds, in which a storage tank for heated liquid is supported on a frame, to be moved over a surface to be treated. A ring conduit is connected to the storage tank, in which a circulation pump is received. A series of spray nozzles is connected to the ring conduit, in addition to a number of closing valves which co-act with the relevant nozzles and which can be operated by suitable control means. During use heated water is circulated constantly through the ring conduit and the storage tank, along the valves. Sensors are provided near the nozzles. When a sensor senses the presence of what is perceived to be a weed, the control system will open a nozzle directly above the weed, spraying hot water onto said weed. By circulating hot water along the valves it is ensured that hot water will be directly available for spraying.

WO2013/093495 discloses an apparatus for controlling vegetation, which comprises a hot liquid container, release means connected to the container and a nozzle assembly for applying a stream of foam which contains steam, connected to the container through the release means. Further, the nozzle assembly includes a shroud defining an enclosure around a spraying duct within which are a flow-restricting aperture, and mixing chambers linked by a duct. Inlet holes communicate between a mixing chamber and the enclosure, so air and steam are sucked into the water stream, and foam is produced.

An aim of the present disclosure is to provide an alternative system and method for control of weeds. An aim of the present disclosure is to provide for an apparatus and method for control of weeds which are effective and environmental friendly. An aim of the present disclosure is to provide for an apparatus and method for weed control which allows for selective spraying of hot liquid onto weeds detected on a surface. At least one of these and other aims can be achieved at least in part by an apparatus and method according to the disclosure.

In an aspect an apparatus comprises a frame movable over a surface, at least a storage tank for hot liquid and a supply system for supplying hot liquid from said at least one storage tank to supply nozzles for dispensing the hot liquid. A control system is provided for controlling the supply nozzles. At least one nozzle supply is provided between the at least one storage tank and a series of supply nozzles, for feeding hot liquid to nozzles of said series of nozzles. This at least one nozzle supply is at least partly surrounded by an isolation tank filled with hot liquid.

The at least one nozzle supply can be connected to the at least one storage tank by a primary supply system, such that hot liquid can be fed to said at least one nozzle supply by said primary supply system and the or each isolation tank can be connected to a hot liquid supply, preferably to said at least one storage tank, by a secondary supply system, such that hot liquid can be fed to said at least one isolation tank by said secondary supply system. Hence different supply systems can be provided for the nozzles and the isolation tank. The primary and secondary supply can be fed from the same hot liquid supply, such as the storage tank, or can be fed from different hot liquid supplies.

In an aspect the control system can comprise at least one imaging device and a computer system comprising at least an algorithm for image detecting of weeds on a surface over which said frame is positioned, wherein the control system is set to at least open individual nozzles and/or groups of nozzles based on at least the position of weeds detected.

In embodiments said at least one imaging device can be designed for infra red imaging and visible light imaging and/or at least two imaging devices can be provided, wherein at least one imaging device is designed for infra red imaging and at least one imaging device is designed for visible light imaging, preferably at least visible red light imaging.

In embodiments the control system comprises at least an algorithm for comparing an infra red image and a visible light image, and for assessment of an organic or inorganic nature of an element imaged based on said comparing of images. In embodiments the control system can comprise a data base of images of at least different weeds, wherein by comparing an image taken with said at least one imaging device with the images in said data base an assessment can be made of the type of weed imaged, wherein the control system is set to control nozzles based on at least said assessment. The data base can be a data base internal or external to the apparatus. The data base can additionally or alternatively comprise data concerning vegetation which is not considered weed, which may be expected on said surface.

In an aspect a method according to the invention can comprise the steps of moving a frame over a surface, said frame supporting at least a storage tank for hot liquid and a supply system for supplying hot liquid from said at least one storage tank to supply nozzles for dispensing the hot liquid, controlling the supply nozzles by a control system, wherein at least one nozzle supply is provided between the at least one storage tank and a series of supply nozzles, feeding hot liquid to nozzles of said series of nozzles.

According to the invention the at least one nozzle supply is at least partly surrounded by an isolation tank through which isolation tank hot liquid flows.

In embodiments an imaging system is used for detecting weeds and/or identifying weeds on said surface and controlling individual nozzles or groups of nozzles for dispensing hot liquid onto weeds detected, preferably keeping nozzles closed in positions where no weeds to be controlled are detected. In embodiments said at least one imaging device can be designed for infra red imaging and visible light imaging. In embodiments at least two imaging devices can be used, wherein with at least one imaging device an infra red image is taken and with at least one imaging device a visible light image is taken, preferably at least a visible red light image. Alternatively combinations of such imaging devices can be used.

The control system can be designed such that different weeds can be detected and/or recognized, for example for identifying the weeds and for setting a timing for opening a nozzle for spraying such weed, and/or for recognizing other vegetation which may not have to be sprayed. In such method a data bank can be used containing images of such weeds and/or vegetation to be identified for image comparison. Such images can for example be but are not necessarily limited to images of visible light, infra red light of combinations thereof.

An imaging system for use in an apparatus or method according to the disclosure. Such imaging system can comprise at least one imaging device, such as for example but not limited to a camera, for example a CCD camera, which can take images in visible light as well as in infra red light, for example near infra red light, or several imaging devices for separately taking visible light images and infra red light images of the same surface area, and image processing software for recognizing organic materials on a surface, especially vegetation, more specifically weeds and/or crop. For differentiating between organic and inorganic materials the software can for example be designed to compare a visible light image of a surface area with an infra red light image, and deciding based on such comparison whether organic material is present in said image and preferably localizing such material on said surface. This will allow a control system to then open specific nozzle or nozzles for spraying such organic material, keeping other nozzles closed. Moreover the imaging system can be designed to identify specific weeds and/or other vegetation based on said images and/or comparison of images, for example by comparing images with images in a data bank, such that a spray pattern from nozzles can be controlled based on such identification.

In further elucidation of the present disclosure different embodiments of an apparatus and method according to the disclosure will be discussed hereafter, with reference to the drawings. These embodiments are merely shown and discussed as examples and should by no means be understood as limiting the scope of the disclosure. In the drawings:

Fig. 1 schematically shows in side view a general set up of an apparatus according to the disclosure, carried by or formed by a vehicle, such as for example a tractor or a trailer or dedicated vehicle;

Fig. 2 schematically shows a lay out of an apparatus according to the disclosure, in a first embodiment;

Fig. 3 schematically shows a lay out of an apparatus according to the disclosure, in a second embodiment;

Fig. 4 schematically shows a lay out of a control system for controlling a weed control system or method; and

Fig. 5A and B schematically show two embodiments of part of an imaging system.

In this description in the different embodiments the same or similar features have the same or similar reference signs. The embodiments are not limiting and different embodiments or parts thereof can be combined.

For example an imaging system as disclosed can be used in different embodiments of methods and apparatus.

In this description weeds should be understood as any vegetation which should be removed from a surface, whereas other vegetation, especially crop, can be understood as any vegetation which should preferably not be removed or damaged by the apparatus or method for weed control.

In this disclosure as a hot liquid preferably water is used, which may contain additives, such as chemicals, for example but not limited to surfactants, weed killers, foaming agents or the like. Clear water is preferred, for example for reasons of environmental concerns.

In this disclosure hot liquid, especially hot water is to be understood as generally water above about 75°C, more specifically above 90°C, such as for example above 95 °C. In preferred embodiments the temperature of the hot liquid when fed to the nozzles is about 97 °C or more, for example 98 or 99 °C. Preferably the liquid is heated to about a boiling temperature, given pressure conditions in the system, or just below such boiling temperature. The pressure in a nozzle supply may be slightly above atmospheric temperature, for example such that the temperature of the liquid in the nozzle supply close to the nozzles is just below boiling temperature but upon leaving a nozzle the pressure of the liquid will drop, bringing it to a boil.

In this disclosure a surface carrying weeds to be sprayed with hot liquid can be any type of surface, such as but not limited to agricultural surface, such as for example earth, or a harder surface, such as for example tiled surfaces, tarmac, brick, for example surfaces of roads, parkings, gravel, stone or any such surfaces. Use of hot liquid for controlling weeds can especially be suitable in areas where fire, especially open fire is not allowed.

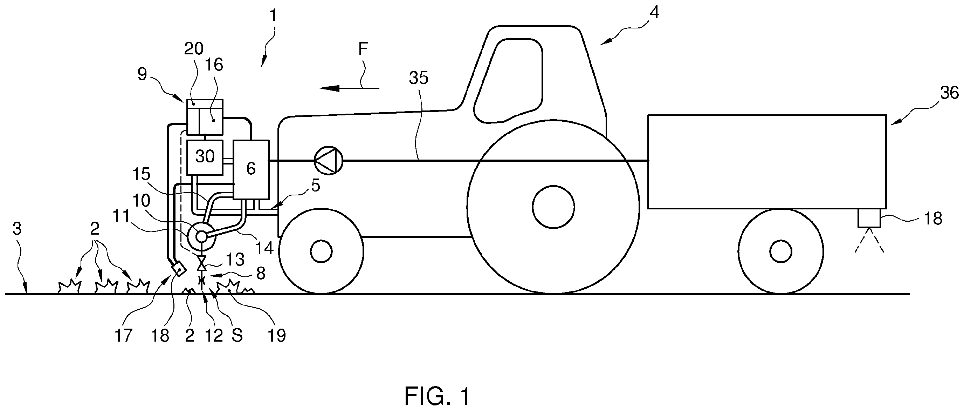

Fig. 1 schematically shows an apparatus 1 for controlling weeds 2 on a surface 3. The apparatus 1 is here shown as carried by a tractor 4 for moving the apparatus 1 over the surface 3, for example as indicated by the arrow F. As discussed, the apparatus 1 can also include such means itself for moving it over a surface 3, and can for example be a self propelling apparatus or can be on a trailer pulled and/or pushed by a vehicle such as a tractor 4. An apparatus 1 can comprise a frame 5 for support by the tractor 4, which frame can support for example a storage tank 6 for hot liquid 7, and a supply system S for supplying hot liquid 7 from said at least one storage tank 6 to supply nozzles 8 for dispensing the hot liquid 7. A control system 9 can be provided for controlling the supply nozzles 8. At least one nozzle supply 10 is provided between the at least one storage tank 6 and a series of supply nozzles 8, for feeding hot liquid 7 to nozzles of said series of nozzles 8. The at least one nozzle supply is at least partly surrounded by an isolation tank 11 filled with hot liquid 7. It will be clear that the storage tank 6, and the mantle tank 27 , as will be discussed, can also be placed differently, for example on the trailer 36, or on the tractor. Also heating means such as boiler 30 can be placed on such trailer 36.

As can be seen in fig. 1 the nozzles 8 have an outlet 12 close to the surface 3, such that hot liquid 7 leaving a nozzle will impact almost directly onto the surface and, especially, weeds 2 thereon and/or therein. Each nozzle is preferably connected to the nozzle supply 10 through a valve 13 controllable through the control system 9 for opening and closing the valve and hence controlling spraying of hot liquid by said nozzle 8.

The at least one nozzle supply 10 can be connected to the at least one storage tank 6 by a primary supply system 14, such that hot liquid 7 can be fed to said at least one nozzle supply 10 by said primary supply system 14. The at least one isolation tank 11 can be connected to said at least one storage tank 6 by a secondary supply system 15, such that hot liquid 7 can be fed to said at least one isolation tank 11 by said secondary supply system 15. In stead of the storage tank 6 the isolation tank 11 can also be connected to another a hot liquid supply 15, such as for example another storage tank (not shown) or a liquid heater, such as a boiler 30, for example a flow through heater. Preferably hot liquid 7 can be supplied to the at least one nozzle supply 10 independently from supplying hot liquid to the at least one isolation tank 11, through the primary and secondary supply systems 14, 15, such that desired temperatures can be reached in both the nozzle supply 10 and the isolation tank 11.

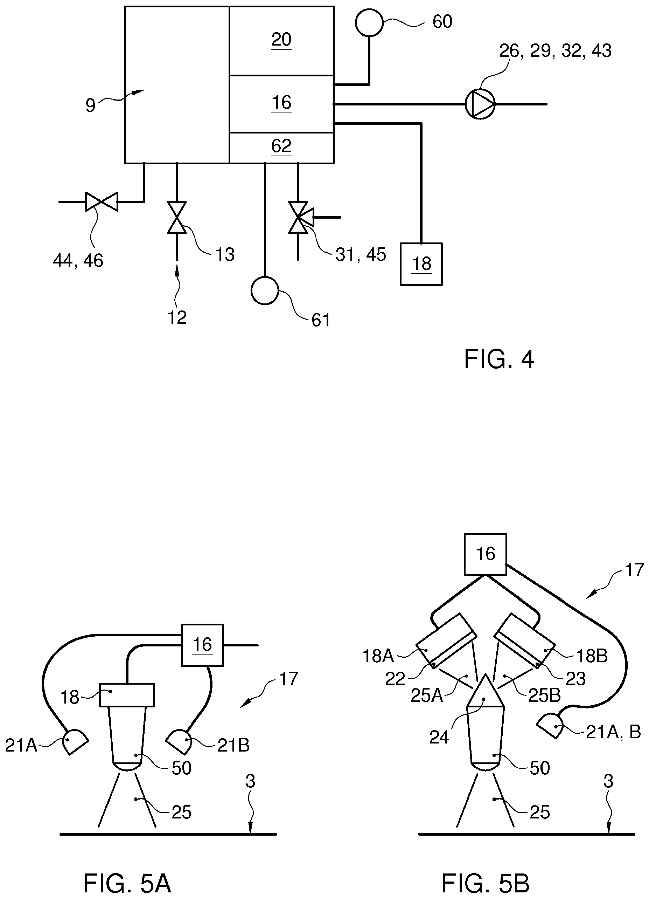

An imaging system 17 can also be provided, preferably carried by the frame 5 and connected to or part of the control system 9. The system 17 can comprise at least one imaging device 18 and a computer system 16 comprising at least an algorithm for image detecting of weeds 2 on a surface 3 over which said frame 5 is positioned. Two embodiments of part of such system 17 are shown schematically in fig. 5A and B. The control system 9 can be set to at least open individual nozzles 8 and/or groups of nozzles 8 based on at least a position of weeds 2 detected. In embodiments the system 17 can be designed for image recognition based on single or multiple images of a surface area 3 and especially of weeds 2 and/or other vegetation 19 growing on said surface 3. For example the system 17 can comprise and/or be connected to a data base 20 comprising data about weeds and/or other vegetation, such as but not limited to image data, such that an image taken from a weed 2 and/or other vegetation 19 can be compared to data contained in said data base 20, for identifying the weed 2 and/or vegetation 19 imaged. The control system 9 can then control the nozzles 8 individually or in groups in order to spray an amount of hot liquid 7 onto identified weed or weeds 2, but not on identified vegetation 19. The amount of liquid 7 sprayed per weed 2 may be the same for each weed, or may be controlled by the control system 9 based on the type of weed and/or its size and/or position.

In embodiments said at least one imaging device 18 can be designed for infra red imaging and visible light imaging, as schematically shown in fig. 5A. In embodiments there can be at least two imaging devices 18A, B, as schematically shown in fig. 5B, wherein at least one imaging device 18A can be designed for infra red imaging and at least one imaging device 18B can be designed for visible light imaging, preferably at least visible red light imaging. It has been recognized that infra red imaging can be used for distinguishing between organic, at least living organic and inorganic material, especially in combination with imaging of the same vegetation (weed 2 and/or other vegetation 19) using normal, visible light, especially including visible red light. This can be used according to or based on the Normalized Difference Vegetation Index (NDVI) according to:

$$NDVI = (NIR − VIS)/(NIR + VIS)$$

Wherein:

NDVI = Normalized Difference Vegetation Index

VIS = Spectral reflectance measurements acquired in the visible (red) region

NIR = Spectral reflectance measurements acquired in the near-infrared region

Hence the control system 9 can comprise at least an algorithm for comparing an infra red image and a visible light image, and for assessment of an organic or inorganic nature of an element imaged, based on said comparing of images. Living plants absorb visible light which they use for photosynthesis, whereas they reflect most infra red light. This leads to an NDVI which is significantly different from that of inorganic or dead material.

As indicated, to this end the imaging system can comprise a single imaging device or a series of similar imaging devices 18, as schematically shown in fig. 5A, the or each imaging device 18 being controlled to take two consecutive images, one quickly after the other, of the same surface area 3, one of the images in the visible light spectrum, preferably including at least visible red light, and the other of the images in the infra red spectrum. To this end the imaging system 17 can be provided with at least an infra red light source 21A for lighting the surface area visible for the imaging device and preferably also a visible light source, especially a red light source 21B. The light sources 21A, 21B can be integrated in one housing, for example with the imaging device 18, or can be in different housings. There can alternatively be a single light source and at least one filter, for changing between red visible light and infra red light.

Alternatively two images can be taken at the same time, one at near infra red imaging and one with visible light imaging, especially red light. This can for example be achieved with two imaging devices 18 as discussed, as schematically shown in fig. 5B, wherein for example an infra red pass filter 22 can be used for the one imaging device 18A and a visible light pass filter 23 for the other imaging device 18B, such that said two images are obtained for comparison. Again suitable light sources 21A and/or 21B can be provided for lighting a surface area 3. A beam splitter 24 can be used for splitting the combined reflective light beam 25 from the surface or a weed 2 and/or other vegetation 19 into two beams 25A, 25B, directed to the two imaging devices 18. These imaging devices can for example be two optical sensors or two separate cameras or any such suitable means. A lens 50 can be provided, if desired.

In embodiments the control system 9 and/or the imaging system 17 can comprise at least an algorithm for comparing an infra red image and a visible light image, and for assessment of an organic or inorganic nature of an element imaged based on said comparing of images, as discussed here above, for example using NDVI.

An imaging system 18 can also be used for different purposes, such as for example but not limited to defining speed of movement of the apparatus over a surface and timing the opening and/or closing of nozzles 8 based on said speed. This negate the necessity of other means for such tracking, such as for example ground radar or encoders driven by tracking wheels, which may be complex, costly and prone to damage and malfunction.

As discussed, a data base 20 can be provided in the system or at least in communication with the imaging system 17, in which data about weeds 2 and/or other vegetation 19 can be stored. In the data base for example morphological data about different weeds and /or other vegetation 19 can be stored, on the bases of which a type of weed 2 and/or vegetation can be identified and/or for example the size of such organic material. This information can then be used for example for dosing hot liquid onto such weed 2 or, if used for other materials to be dosed, such as liquid chemicals, onto vegetation 19. Dosing, such as dosing of a spray of hot liquid onto a weed 2, and especially differences in dosing can for example be obtained by using at least two nozzles 8 directed to the same surface area 3, having the same or different debits. This means that dosing can be done for example based on the size and/or type of weed 2, the speed of the apparatus 1 relative to the surface 3 or for example the relative height H of the nozzle above the weed 2, which may vary depending on the heights of weeds 2 but also on unevenness of the surface area 3. In embodiments results of the spraying of weeds 2 can be entered into the data base 20 too, such that the system can be a learning system, wherein a spraying and dosing regime can be optimized based on such results.

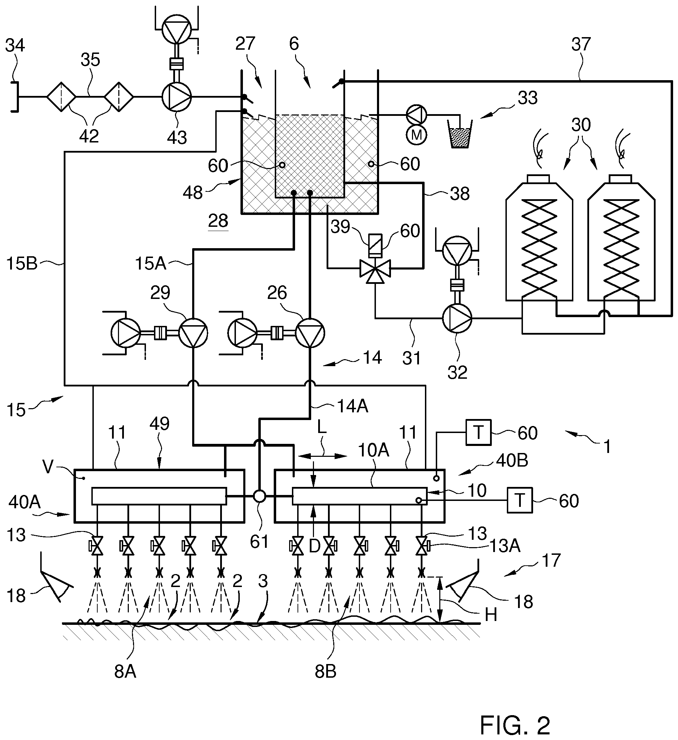

Fig. 2 schematically shows a possible lay out of an apparatus 1 for control of weed 2, wherein a storage tank 6 and at least one, in this embodiment two nozzle supplies 10 are shown, each substantially encased within an isolation tank 11. Each of the nozzles 8 is connected to a nozzle supply 10 through a valve 13, which can be a standard open-close valve or a proportional valve. Each valve 13 is provided with an appropriate drive 13A, connected to the control system 9, for opening and closing the valve 13 on a commando from the control system 9. The nozzle supplies 10 are formed basically by a pipe 10A closed at opposite ends. The pipe 10A can have a longitudinal direction L between opposite ends and a cross section perpendicular to said longitudinal direction L. The internal cross section D of the pipe 10A preferably is larger, more preferably significantly larger than the internal cross section of the nozzles 8, such that the pipe 10A can hold a significant amount of hot liquid, preferably such that flow of liquid out of a nozzle 8 or a series of nozzles will not lead to a significant drop of pressure of the water inside the nozzle supply and can be replenished sufficiently quickly enough through the primary circuitry 14. The isolation tank 11 has an internal volume V which encloses said pipe 10A.

The primary supply system 14 comprises a conduit 14A which connects the two nozzle supplies 10 with the storage tank 6. A pump 26 is provided in said conduit 14A for pressurizing fluid 7 into the supplies 10.

The secondary supply system 15 comprises a first conduit 15A connecting the isolation tanks 11 to the storage tank 6. The secondary supply system further comprises a second conduit or set of conduits 15B connecting the respective isolation tanks 11 to a mantle tank 27 surrounding at least in part the storage tank 6. A volume of liquid 7 is provided in said mantle tank 27, i.e. outside the storage tank 6. Hence the mantle tank isolates the storage tank 6 substantially from the surroundings 28. A pump 29 is provided in the first conduit 15A. Hot liquid 7 can be circulated from the storage tank 6 through the first conduit 15A, the isolation tanks 11 and the second conduit 15B into the mantle tank 27.

An apparatus 1 of fig. 2 further comprises at least one heating apparatus 30, such as a boiler, for example gas, oil or electrically heated. In the embodiment shown two boilers 30 are shown, by way of example only. The boiler or boilers 30 are provided with an inlet conduit 31, connected to the mantle tank 27. Through the inlet conduit 31 liquid from the mantle tank 27 can be fed into the boilers 30. A pump 32 can be provided in said conduit 31. A supply system 33 for water softener can also be connected to the mantle tank 27. The mantle tank 27 moreover is connected to a liquid, i.e. water supply 34 through a feed conduit 35. The liquid supply 34 can for example be a water mains or, as shown in fig. 1, a storage container 36 mounted on the tractor or a trailer or such movable supply. In the feed conduit 35 if desired filters 42 can be provided, for example two filters, for filtering out larger and smaller particles from the water, as known in the art. Moreover a supply pump 43 can be provided.

Moreover the boiler or boilers 30 are connected to the storage tank 6 through an outlet conduit 37, for feeding hot liquid 7, i.e. water 7 heated by the boiler(s) 30, into the storage tank 6. A circulation conduit 38 can be provided, connected between the storage tank 6 and a three way valve 39 provided in the inlet conduit 31, such that hot liquid 7 from the storage tank 6 can be mixed with liquid from the mantle tank 27.

The pumps 26, 29, 32 and/or 43 and valves 13, 31, 44, 45 and/or 46 can be, but not necessarily are proportional pumps and/or valves, connected to the control system, such that flow of liquid can be regulated and controlled by the control system. Similarly the valves of the nozzles 8 can be, but not necessarily are, proportional valves, connected to the control system, such that flow of liquid can be regulated and controlled by the control system. Some of the valves 13, 31, 44, 45 and/or 46, especially the three way valves 31 and/or 45 and more specifically at least the three way valve 31 connecting the storage tank 6 to the conduit 38 coming from the mantle tank 27 could be temperature controllable or controlled, for example for automatically controlling the temperature of the water flowing to the boiler or boilers 30.

As discussed an imaging system 17 is also provided, which in this embodiment has two imaging devices 18. In this embodiment as indicated two nozzle supplies 10 are provided, in parallel. Each nozzle supply 10 is connected to a series 8A, 8B of nozzles 8. In the schematic drawing in fig. 2 each series is represented by five nozzles 8, but obviously other numbers of nozzles 8 can be provided, for example between 1 and 30 nozzles per series 8A, 8B, such as for example between 5 and 15 nozzles per series 8A, 8B. There can for example be about 10 or 20 nozzles per series 8A, 8B. In an apparatus according to the description obviously another number of nozzle supplies 10 with nozzle series 8A, 8B can be provided, for example one or three, whereas any total number of nozzles 8 can be provided, such as for example between 2 and 60 nozzles, for example between 10 and 40 nozzles.

In the embodiment shown in fig. 2 one imaging device 18 is provided near opposite ends 40A, 40B of the series 8A, 8B of nozzles 8. Each imaging device 18 can be designed for imaging a surface area 3 below and/or in front of the series 8A, B of nozzles 8 adjacent to it. The imaging devices 18 can obviously also be placed in another position, for example directly in front of a series 8A, 8B of nozzles 8, as schematically shown in fig. 1. In embodiments of the imaging system 17 as for example shown in fig. 5A, each imaging device 18 can be designed as a single imaging device for taking consecutive images in visible and infra red light. In embodiments as for example shown in fig. 5B, each imaging device 18 as shown in fig. 2 can in fact comprise two imaging devices 18A, B, one for taking a visible light image, the other for infra red imaging. Obviously per series 8A, 8B of nozzles a different number of imaging devices 18 could be provided, or one imaging device 18 or set of imaging devices 18A, 18B for all of the nozzles 8.

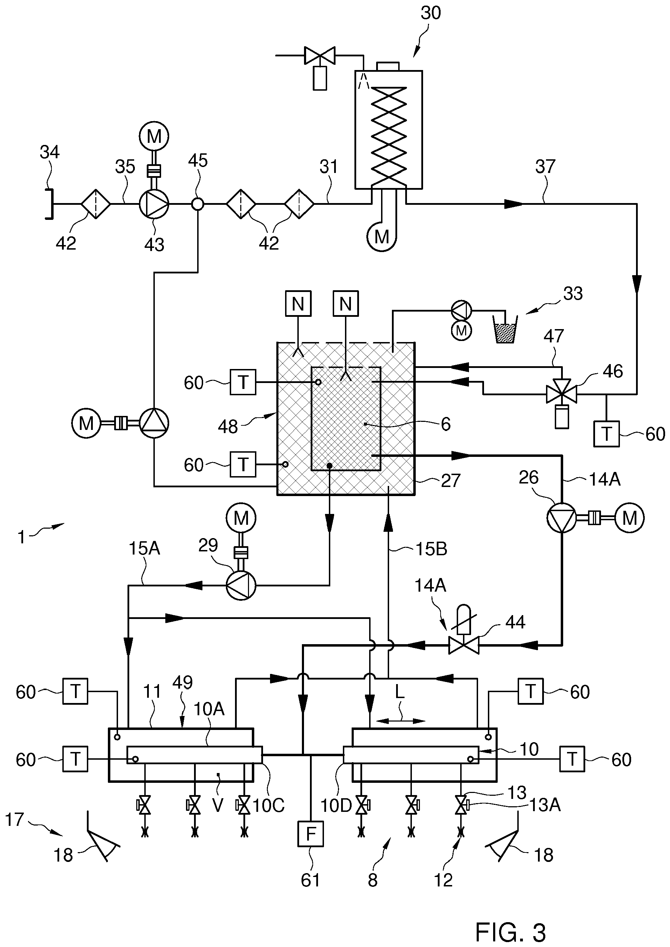

Fig. 3 schematically shows an alternative embodiment of an apparatus 1 according to the disclosure, which is to a high degree comparable to that of fig. 1. Therefore the embodiment of fig. 3 is mainly discussed with respect to differences regarding fig. 2.

In the embodiment of fig. 3 the storage tank 6 and surrounding mantle tank 27 are again connected to at least one, and in the embodiment shown two nozzle supplies 10, connected in parallel to the conduit 14A. Each nozzle supply is, for the sake of convenience, provided with three nozzles 8 in each series 8A, 8B, but this is an example only. Preferably a number of nozzles can be used in each series or in a single or more series, as discussed with respect to fig. 2. In this embodiment each nozzle supply 10 is largely surrounded and encased by an isolation tank 11, as in fig. 2, but facing ends 10C, 10D may extend somewhat outside said isolation tank 11. This may ease connecting the nozzle supplies 10 to the conduit 14A. In the conduit 14A a valve or throttle, such as but not limited to a proportional valve or throttle 44 is provided, controlling supply of hot water to the nozzle supplies 10.

In this embodiment one boiler 30 is provided, which is connected to an inlet conduit 31, connected to the return conduit 15B through a three way valve 45. The said three way valve 45 moreover is connected to a liquid, i.e. water supply 34 through a feed conduit 35. The liquid supply 34 can for example be a water mains or, as shown in fig. 1, a storage container 36 mounted on the tractor or a trailer or such movable supply. In the feed conduit 35 and/or the inlet conduit 31 if desired filters 42 can be provided, for example two filters, for filtering out larger and smaller particles from the water, as known in the art. Moreover a supply pump 43 can be provided. Again a supply system 33 for water softener can also be connected to the mantle tank 27.

Moreover the boiler 30 is connected to the storage tank 6 through an outlet conduit 37, for feeding hot liquid 7, i.e. water 7 heated by the boiler(s) 30, into the storage tank 6. In the outlet conduit 37 a three way valve 46 can be provided, connected to the mantle tank 27 through a side conduit 47. Thus hot liquid can be directed from the boiler 30 to the storage tank 6, to the mantle tank 27 or proportionally to both, by control of the three way valve 46.

It shall be clear that in the embodiments shown isolation means can be provided, for example for thermally isolating the mantle tank 27 at outside faces 48 thereof and/or for thermally isolating the isolation tanks 11 at outside faces 49 thereof. Similarly conduits, such as at least conduits feeding hot liquid can be thermally isolated in order to preserve heat and minimize energy consumption.

In an apparatus according to fig. 3 again an imaging system 17 can be added for registering weeds 2 and/or other vegetation 19 on a surface 3, as discussed before, for controlling nozzles 8 and spraying weeds 2 based on such imaging.

Fig. 4 schematically shows an embodiment of a control system for an apparatus 1 of the disclosure, wherein the system 9 comprises a computer system for controlling the imaging system 17 , especially the imaging device or devices 18. Different temperature sensors 60 can be connected to the system 9, for sensing and for using in controlling the temperature of especially the liquids in the various parts of the system. Moreover the pumps 26, 29, 32 and 43 and the valves 13, 31, 44, 45 and 46 can be connected to such system 9 for control of these pumps and valves. Furthermore if desired flow sensors 61 can be connected to the control system which can measure flow in different conduits and/or circuitries of the apparatus. The control system 9 can be provided with communication means 62, such as a wireless transmitter and/or receiver, for communication with an external system, such as for example a central computer (not shown) comprising a data bank 20 and/or designed for setting and checking the control system 9 remotely.

An apparatus according to the disclosure can be used as follows.

Water is supplied in the mantle tank 27 and in the storage tank 6, and if applicable, in the container 36. Then the water in the storage tank 6 is heated by the boilers 30, preferably to a temperature close to the boiling temperature, for example above 90 °C, such as for example to 98 or 99°C. Alternatively the storage tank 6 could be filled with such heated water 7. Then the apparatus is driven or otherwise transported to a surface 3 to be treated. During transport the water 7 in the mantle tank 27 will be heated by heat transfer through the wall of the storage tank 6, such that the water in the mantle tank 27 is gradually brought also to a temperature close to the temperature of the water in the storage tank 6, for example to a temperature preferably no more than about 5 °C below the temperature of the water in the storage tank 6, for example about 2 degrees or less below said temperature. Hot water 7 could also be provided directly into the mantle tank 27, for example through the circulation conduit and/or through the secondary circuit 15, in order to speed up heating of said water and/or bring its temperature even closer that the temperature of the water inside the storage tank 6 or even above it.

At a location at which weeds have to be controlled the apparatus is moved over the relevant surface area 3, such that weeds 2 on said surface can be sprayed with hot water from the storage tank, through the nozzles 8.

During use hot liquid is circulated from the storage tank 6 through the secondary circuit 15, flowing through the isolation tanks 11 around the nozzle supplies 10, ensuring proper temperature control of the hot water 7 inside the nozzle supplies 10. This ensures that at all times water at the appropriate temperature is available at each of the nozzles 8, to be expelled through such nozzle 8 when vegetation, especially weeds 2 are detected near said nozzle 8 or nozzles 8. By the control system 9 the nozzles 8, especially the valves 13 of the nozzles 8 can be operated, preferably individually, such that specific parts of the surface area 3 and especially weeds 2 growing on said surface area can be sprayed, whereas other nozzles 8 can be kept closed. Alternatively or additionally groups of nozzles 8 can be opened and/or closed in concert. By spraying the hot, preferably boiling hot water onto the weeds 2 the weeds will be controlled by killing them at least to a sufficient degree. Spraying should in this aspect be understood as including but not limited to allowing water to flow out of the nozzles or forcing the water out of the nozzles. The pressure of the water leaving the nozzles may be atmospheric of close to atmospheric, or can be above atmospheric, especially pressurized. In embodiments the pressure can be controlled by the control system 9, for example for providing lower pressure at softer surfaces than at harder surfaces 3.

By way of example only, in an apparatus 1 according to the disclosure the heating capacity for the liquid to heat from about 10°C to about 98 °C can for example be about 40 - 50 l/min, whereas per nozzle 8 for example a maximum of about 1 to 1.2 l/min can be sprayed. Obviously these are only given by way of example and may be chosen differently for different embodiments, applications and capacities.

By providing the isolation tank filled with hot liquid 7 that can be circulated the water in the primary circuit 14 does not have to circulate, whereas it can nevertheless maintain the high temperature by heat transfer from the liquid in the isolation tank 11 to the water in the nozzle supply 10. The water inside the nozzle supplies 10 can be pressurized by the pump 26, for example to a pressure slightly above atmospheric pressure, such that upon release through a nozzle 8 the pressure may drop to about atmospheric pressure and/or the water may boil through the slight pressure drop and/or can evaporate due to the pressure drop. The pressure in the primary circuitry 14, especially in the nozzle supplies 10 can be controlled independently from the pressure in the secondary circuitry 15. Since there is limited to no flow inside the nozzle supply 10, especially when no nozzles 8 are open, substantially the same pressure is available at all nozzles 8. Additives can be added to the water in the primary circuitry 14, especially when fed into the nozzle supplies 10, whereas the secondary circuitry can be kept free of such additives.

As discussed in embodiments the liquid in the secondary circuitry 15 can be heated using a different heating device, such as a boiler, than is used for heating the liquid, especially water in the primary circuitry 14. In such embodiments the first and second circuitries 14, 15 can be entirely separated circuitries which can comprise the same or different liquids.

In embodiments the imaging system 17 can be used for detecting and locating organic materials 2, 19 on and/or in said surface 3, and controlling nozzles 8 based on said locating, such that only hot liquid, especially water, is sprayed from one or more nozzles 8 directed at said organic material 2, 19, keeping other nozzles 8 closed. As discussed the organic or non organic nature of elements detected on said surface 3 can be defined based on comparison of visible light images and infra red images, using for example NDVI classification and/or by using image recognition software and a data bank 20. Such software and data bank 20 can also be used for distinguishing between weeds 2 and other vegetation 19, and/or for recognizing types of weeds 2 and/or vegetation 19 and/or for example size thereof, and controlling the amount of water sprayed onto such material, especially weeds 2 by controlling the or each relevant nozzle 8, especially the valve or valves 13 thereof. Additionally or alternatively the imaging system can be designed for recognizing weeds directly by image recognition based on information stored in the data base 20.

The imaging system 17 can be designed to take images both prior to and after spraying, in order to assess the effects of the spraying on the weeds 2 sprayed. To that end for example at least one additional imaging device 18 could be provided behind the nozzles 8 seen in the direction F, such that it can image the surface after passing of the nozzles 8. Providing such imaging device well behind the nozzles may prolong the time between spraying and imaging. Such assessment can be fed back into the control system, for example the data base 20, for optimizing spraying patterns and control based on such information too. Alternatively or additionally other means can be provided for entering such information into the system, for example a computer terminal, preferably remotely. An imaging system 17 can be designed for registering movement of the apparatus 1 relative to the surface 3, such that the position of weeds 2 relative to the nozzles 8 can be assessed at any given point in time during use, such that for example accurate timing of opening and closing of relevant nozzles 8 can be optimized. This can also allow positioning of the imaging device or devices 18 relatively freely and thus can be optimized.

The present disclosure is by no means limited to the specific embodiments disclosed herein. Many variations are possible within the scope of the disclosure. For example an imaging system 17 and control system for such imaging device, and/or a data bank 20 as discussed could also be used for different apparatus for controlling weeds, such as for example but not limited to systems as mentioned in the introduction to the specification. Moreover a return conduit could be provided between the or each nozzle supply 10 and the storage tank 6 and/or the mantle tank 27, for circulating liquid through the nozzle supplies 10 as well. In embodiments for example the nozzle supply and the storage tank could be integrated, and/or the isolation tank and the mantle tank could be integrated. Moreover different systems and/or elements of different embodiments as disclosed could be combined. In embodiments the storage tank 6 could have a very small volume or could be formed by conduits of the primary circuit 14, whereas the storage tank 6 could also be integrated in or be part of a heating device such as a boiler 30. Obviously the temperatures of the different areas and circuitries in an apparatus can be controlled differently, depending on for example the liquids used, the pressures and/or the weeds to be controlled.

**Claims**

1. Apparatus (1) for controlling weeds (2), movable over a surface (3), comprising at least a storage tank (6) for hot liquid (7) and a supply system (S) for supplying hot liquid (7) from said at least one storage tank (6) to supply nozzles (8) for dispensing the hot liquid (7), wherein a control system (9) is provided for controlling the supply nozzles (8), wherein at least one nozzle supply (10) is provided between the at least one storage tank (6) and a series of supply nozzles (8), for feeding hot liquid (7) to nozzles of said series of nozzles (8), **characterized in that** the at least one nozzle supply (10) is at least partly surrounded by an isolation tank (11) filled with hot liquid (7).

2. Apparatus (1) according to claim 1, wherein the at least one nozzle supply (10) is connected to the at least one storage tank (6) by a primary supply system (14), such that hot liquid (7) can be fed to said at least one nozzle supply (10) by said primary supply system (14).

3. Apparatus (1) according to claim 1 or 2, wherein the or each isolation tank (11) is connected to a hot liquid supply, preferably to said at least one storage tank (6), by a secondary supply system (15), such that hot liquid (7) can be fed to said at least one isolation tank (11) by said secondary supply system (15), wherein more preferably:

   - said secondary supply system (15) comprises a recirculation circuit including said at least one isolation tank (11), for circulated hot liquid (7) through at least the at least one isolation tank (11) and the hot liquid supply (15) and/or
   - the supply nozzles (10) are not in direct fluid contact with the at least one isolation tank (11).

4. Apparatus (1) according to any one of the previous claims, wherein the at least one nozzle supply (10) and the at least one isolation tank (11) are connected to the same storage tank as hot liquid supply.

5. Apparatus (1) according to any one of claims 1 - 4, wherein the at least one nozzle supply (10) and the at least one isolation tank (11) are connected to different storage tanks as hot liquid supply.

6. Apparatus (1) according to any one of the previous claims, wherein:

   - at least one boiler (30) is provided for heating liquid to be fed into the at least one storage tank (6) and/or the at least one isolation tank (11) and/or
   - the at least one storage tank (6) is at least partly surrounded by a mantel tank (27), filled with liquid

wherein preferably the mantle tank (27) is connected to the at least one boiler (30) through a feed circuit, for heating the liquid, wherein the at least one storage tank (6) is connected to the at least one boiler (30) through a hot supply, wherein more preferably the hot supply is connected to the feed circuit through a valve (46) for directing flow of hot liquid (7) to the mantel tank (27) and/or to the storage tank (6).

7. Apparatus (1) according to any one of the previous claims, wherein the control system (9) comprises at least one imaging device (18) and a computer system comprising at least an algorithm for image detecting of weeds on a surface (3) over which said frame (5) is positioned, wherein the control system (9) is set to at least open individual nozzles and/or groups of nozzles (8) based on at least a position of weeds (2) detected,, wherein preferably:

   - said at least one imaging device (18) is designed for infra red imaging and visible light imaging; and/or
   - at least two imaging devices (18) are provided, wherein at least one imaging device (18) is designed for infra red imaging and at least one imaging device (18) is designed for visible light imaging, preferably at least visible red light imaging.

8. Apparatus (1) according to claim 7, wherein the control system (9) comprises at least an algorithm for comparing an infra red image and a visible light image, and for assessment of an organic or inorganic nature of an element imaged based on said comparing of images.

9. Apparatus (1) according to any one of claims 7 - 8, wherein the control system (9) comprises a data base (20) of images of different weeds, wherein by comparing an image taken with said at least one imaging device (18) with the images in said data base (20) an assessment can be made of the type of weed imaged, wherein the control system (9) is set to control nozzles (8) based on at least said assessment.

10. Apparatus (1) according to any one of the previous claims, wherein the control system (9) comprises at least one temperature sensor system (60) for controlling the temperature of the hot liquid (7) in at least the at least one nozzle supply (10) and the at least one isolation tank (11), preferably such that the temperature of the hot liquid (7) in the at least one isolation tank (11) is equal to or higher than the temperature of the hot liquid (7) in the at least one nozzle supply (10), more preferably close to a boiling temperature of said hot liquid in said nozzle supply (10).

11. Method for controlling weeds (2) on a surface (3), wherein a frame (5) is moved over a surface (3), said frame (5) supporting at least a storage tank (6) for hot liquid (7) and a supply system for supplying hot liquid from said at least one storage tank (6) to supply nozzles (8) for dispensing the hot liquid (7), wherein a control system (9) is provided controlling the supply nozzles (8), wherein at least one nozzle supply (10) is provided between the at least one storage tank (6) and a series of supply nozzles (8), feeding hot liquid (7) to nozzles of said series of nozzles.

12. Method according to claim 11, wherein an imaging system (17) is used for detecting weeds (2) and/or identifying weeds (2) on said surface (3) and controlling individual nozzles (8) or groups of nozzles (8) for dispensing hot liquid (7) onto weeds (2) detected, preferably keeping nozzles (8) closed in positions where no weeds (2) to be controlled are detected.

13. Method according to any one of claims 11 or 12, wherein:

- with said at least one imaging device (18) an infra red image and a visible light image is taken of a surface area (3); and/or
- at least two imaging devices (18) are used, wherein with at least one imaging device (18) an infra red image is taken and with at least one imaging device (18) a visible light image is taken, preferably at least a visible red light image

wherein preferably with the control system (9) an infra red image and a visible light image are compared, and based on said comparing of images the organic or inorganic nature of an element imaged is assessed.

14. Method according to any one of claims 11 - 13, wherein an image taken with said at least one imaging device (18) is compared with images in a data base (20) comprises images of different weeds (2), on the basis of which an assessment is made of the type of weed or weeds imaged, wherein the control system (9) is controlled to open at least one nozzle (8) based on at least said assessment.

15. Method according to any one of claims 11 - 14, wherein the at least one nozzle supply (10) is at least partly surrounded by an isolation tank (11) through which isolation tank (11) hot liquid (7) flows.

**Patentansprüche**

1. Vorrichtung (1) zur Bekämpfung von Unkraut (2), die über eine Fläche (3) bewegbar ist, mit wenigstens einem Speichertank (6) für heiße Flüssigkeit (7) und einem Zuführsystem (S) zum Zuführen von heißer Flüssigkeit (7) aus dem wenigstens einen Speichertank (6) zu Zufuhrdüsen (8) zum Ausbringen der heißen Flüssigkeit (7), wobei ein Steuersystem (9) zum Steuern der Zufuhrdüsen (8) bereitgestellt ist, wobei wenigstens eine Düsenzuführung (10) zwischen dem wenigstens einen Speichertank (6) und einer Reihe von Zufuhrdüsen (8) zum Zuführen von heißer Flüssigkeit (7) zu Düsen der Reihe von Düsen (8) vorgesehen ist, **dadurch gekennzeichnet, dass** die wenigstens eine Düsenzuführung (10) wenigstens teilweise von einem mit heißer Flüssigkeit (7) gefüllten Isoliertank (11) umgeben ist.

2. Vorrichtung (1) nach Anspruch 1, wobei die wenigstens eine Düsenzuführung (10) mit dem wenigstens einen Speichertank (6) durch ein primäres Zuführsystem (14) verbunden ist, so dass heiße Flüssigkeit (7) der wenigstens einen Düsenzuführung (10) durch das primäre Zuführsystem (14) eingespeist werden kann.

3. Vorrichtung (1) nach Anspruch 1 oder 2, wobei der oder jeder Isolationstank (11) durch ein sekundäres Zuführsystem (15) mit einer Zuführung heißer Flüssigkeit, vorzugsweise mit dem wenigstens einen Speichertank (6), verbunden ist, so dass heiße Flüssigkeit (7) durch das sekundäre Zuführsystem (15) in den wenigstens einen Isoliertank (11) eingespeist werden kann, wobei bevorzugter:

- das sekundäre Zuführsystem (15) einen Rezirkulationskreislauf umfasst, der den wenigstens einen Isoliertank (11) einschließt, um heiße Flüssigkeit (7) durch wenigstens den wenigstens einen Isoliertank (11) und die Zuführung heißer Flüssigkeit (15) zu zirkulieren und/oder
- die Zufuhrdüsen (10) nicht in direktem Fluidkontakt mit dem wenigstens einen Isoliertank (11) stehen.

4. Vorrichtung (1) nach einem der vorhergehenden Ansprüche, wobei die wenigstens eine Düsenzuführung (10) und der wenigstens eine Isoliertank (11) mit demselben Speichertank als Zuführung heißer Flüssigkeit verbunden sind.

5. Vorrichtung (1) nach einem der Ansprüche 1 bis 4, wobei die wenigstens eine Düsenzuführung (10) und der wenigstens eine Isoliertank (11) mit verschiedenen Speichertanks als Zuführung heißer Flüssigkeit verbunden sind.

6. Vorrichtung (1) nach einem der vorhergehenden Ansprüche, wobei:

- wenigstens ein Kessel (30) zur Erwärmung von Flüssigkeit bereitgestellt ist, die in den wenigstens einen Speichertank (6) und/oder den wenigstens einen Isoliertank (11) eingespeist wird, und/oder

- der wenigstens eine Speichertank (6) wenigstens teilweise durch einen mit Flüssigkeit gefüllten Manteltank (27) umgeben ist,

wobei der Manteltank (27) vorzugsweise mit dem wenigstens einen Kessel (30) durch einen Einspeisekreislauf verbunden ist, um die Flüssigkeit zu erwärmen, wobei der wenigstens eine Speichertank (6) mit dem wenigstens einen Kessel (30) durch eine Zuführung heißer Flüssigkeit verbunden ist, wobei die Zuführung heißer Flüssigkeit bevorzugter mit dem Einspeisekreislauf über ein Ventil (46) verbunden ist, um den Fluss der heißen Flüssigkeit (7) zum Manteltank (27) und/oder zum Speichertank (6) zu leiten.

7. Vorrichtung (1) nach einem der vorhergehenden Ansprüche, wobei das Steuersystem (9) wenigstens eine Bildgebungsvorrichtung (18) und ein Computersystem umfasst, das wenigstens einen Algorithmus zur Bilderkennung von Unkräutern auf einer Fläche (3) umfasst, über der der Rahmen (5) positioniert ist, wobei das Steuersystem (9) so eingestellt ist, dass es wenigstens einzelne Düsen und/oder Gruppen von Düsen (8) basierend auf wenigstens einer Position von erkanntem Unkraut (2) öffnet, wobei vorzugsweise:

- die wenigstens eine Bildgebungsvorrichtung (18) für die Infrarotabbildung und die Abbildung mit sichtbarem Licht ausgelegt ist; und/oder
- wenigstens zwei Bildgebungsvorrichtungen (18) bereitgestellt sind, wobei wenigstens eine Bildgebungsvorrichtung (18) zur Infrarotabbildung und wenigstens eine Bildgebungsvorrichtung (18) zur Abbildung mit sichtbarem Licht, vorzugsweise wenigstens mit sichtbarem Rotlicht, ausgelegt ist.

8. Vorrichtung (1) nach Anspruch 7, wobei das Steuersystem (9) wenigstens einen Algorithmus zum Vergleich eines Infrarotbildes und eines Bildes mit sichtbarem Licht und zur Bewertung der organischen oder anorganischen Beschaffenheit eines abgebildeten Elements basierend auf dem Vergleich der Bilder umfasst.

9. Vorrichtung (1) nach einem der Ansprüche 7 bis 8, wobei das Steuersystem (9) eine Datenbank (20) mit Bildern verschiedener Unkräuter umfasst, wobei durch den Vergleich eines mit der wenigstens einen Bildgebungsvorrichtung (18) aufgenommenen Bildes mit den Bildern in der Datenbank (20), eine Bewertung der Art des abgebildeten Unkrauts vorgenommen werden kann, wobei das Steuersystem (9) so eingestellt ist, dass es die Düsen (8) basierend auf wenigstens dieser Bewertung steuert.

10. Vorrichtung (1) nach einem der vorhergehenden Ansprüche, wobei das Steuersystem (9) wenigstens ein Temperatursensorsystem (60) zum Steuern der Temperatur der heißen Flüssigkeit (7) in wenigstens der wenigstens einen Düsenzuführung (10) und dem wenigstens einen Isoliertank (11) umfasst, vorzugsweise so, dass die Temperatur der heißen Flüssigkeit (7) in dem wenigstens einen Isoliertank (11) gleich oder höher ist als die Temperatur der heißen Flüssigkeit (7) in der wenigstens einen Düsenzuführung (10), bevorzugter nahe einer Siedetemperatur der heißen Flüssigkeit in der Düsenzuführung (10).

11. Verfahren zur Bekämpfung von Unkraut (2) auf einer Fläche (3), wobei ein Rahmen (5) über eine Oberfläche (3) bewegt wird, wobei der Rahmen (5) wenigstens einen Speichertank (6) für heiße Flüssigkeit (7) und ein Zuführsystem zum Zuführen von heißer Flüssigkeit aus dem wenigstens einen Speichertank (6) zu Zufuhrdüsen (8) zum Ausbringen der heißen Flüssigkeit (7) trägt, wobei ein Steuersystem (9) bereitgestellt ist, das die Zufuhrdüsen (8) steuert, wobei wenigstens eine Düsenzuführung (10) zwischen dem wenigstens einen Speichertank (6) und einer Reihe von Zufuhrdüsen (8) bereitgestellt ist, die heiße Flüssigkeit (7) zu Düsen der Reihe von Düsen zuführt.

12. Verfahren nach Anspruch 11, wobei ein Abbildungssystem (17) zur Erkennung von Unkräutern (2) und/oder zum Identifizieren von Unkraut (2) auf der Fläche (3) und zum Steuern einzelner Düsen (8) oder Gruppen von Düsen (8) zum Ausbringen von heißer Flüssigkeit (7) auf erkanntes Unkraut (2) verwendet wird, wobei die Düsen (8) vorzugsweise in Positionen geschlossen gehalten werden, in denen kein zu bekämpfendes Unkraut (2) erkannt wird.

13. Verfahren nach einem der Ansprüche 11 oder 12, wobei:

- mit der wenigstens einen Bildgebungsvorrichtung (18) ein Infrarotbild und ein Bild mit sichtbarem Licht von einem Oberflächenbereich (3) aufgenommen wird; und/oder
- wenigstens zwei Bildgebungsvorrichtungen (18) verwendet werden, wobei mit wenigstens einer Bildgebungsvorrichtung (18) ein Infrarotbild und mit wenigstens einer Bildgebungsvorrichtung (18) ein Bild mit sichtbarem Licht, vorzugsweise wenigstens ein Bild mit sichtbarem Rotlicht, aufgenommen wird

wobei mit dem Steuersystem (9) vorzugsweise ein Infrarotbild und ein Bild mit sichtbarem Licht verglichen werden und basierend auf dem Vergleich der Bilder die organische oder anorganische Beschaffenheit eines abgebildeten Elements bewertet wird.

14. Verfahren nach einem der Ansprüche 11 bis 13, wobei ein mit der wenigstens einen Bildgebungsvorrichtung (18) aufgenommenes Bild mit Bildern in einer Datenbank (20) verglichen wird, die Bilder von verschiedenen Unkräutern (2) umfasst, auf deren Grundlage eine Bewertung der Art des Unkrauts oder der Unkräuter, die abgebildet sind, vorgenommen wird, wobei das Steuersystem (9) so gesteuert wird, dass es wenigstens eine Düse (8) basierend auf wenigstens der Bewertung öffnet.

15. Verfahren nach einem der Ansprüche 11 bis 14, wobei die wenigstens eine Düsenzuführung (10) wenigstens teilweise von einem Isoliertank (11) umgeben ist, durch den heiße Flüssigkeit (7) fließt.

## Revendications

1. Appareil (1) pour contrôler des mauvaises herbes (2), déplaçable sur une surface (3), comprenant au moins un réservoir de stockage (6) pour du liquide chaud (7) et un système d'alimentation (S) pour alimenter en liquide chaud (7) à partir dudit au moins un réservoir de stockage (6) pour alimenter des buses (8) pour distribuer le liquide chaud (7), dans lequel un système de contrôle (9) est fourni pour contrôler les buses d'alimentation (8), dans lequel au moins une alimentation de buse (10) est fournie entre le au moins un réservoir de stockage (6) et une série de buses d'alimentation (8), pour introduire du liquide chaud (7) dans les buses de ladite série de buses (8), **caractérisé en ce que** la au moins une alimentation de buse (10) est au moins partiellement entourée par un réservoir d'isolement (11) rempli avec du liquide chaud (7).

2. Appareil (1) selon la revendication 1, dans lequel la au moins une alimentation de buse (10) est connectée au au moins un réservoir de stockage (6) par un système d'alimentation primaire (14), de sorte que du liquide chaud (7) peut être introduit dans ladite au moins une alimentation de buse (10) par ledit système d'alimentation primaire (14).

3. Appareil (1) selon la revendication 1 ou 2, dans lequel le ou chaque réservoir d'isolement (11) est connecté à une alimentation de liquide chaud, de préférence audit au moins un réservoir de stockage (6), par un système d'alimentation secondaire (15), de sorte que du liquide chaud (7) peut être introduit dans ledit au moins un réservoir d'isolement (11) par ledit système d'alimentation secondaire (15), dans lequel encore mieux :

- ledit système d'alimentation secondaire (15) comprend un circuit de recirculation incluant ledit au moins un réservoir d'isolement (11), pour du liquide chaud mis en circulation (7) à travers au moins le au moins un réservoir d'isolement (11) et l'alimentation de liquide chaud (15) et/ou
- les buses d'alimentation (10) ne sont pas en contact de fluide direct avec le au moins un réservoir d'isolement (11).

4. Appareil (1) selon l'une quelconque des revendications précédentes, dans lequel la au moins une alimentation de buse (10) et le au moins un réservoir d'isolement (11) sont connectés au même réservoir de stockage comme alimentation de liquide chaud.

5. Appareil (1) selon l'une quelconque des revendications 1-4, dans lequel la au moins une alimentation de buse (10) et le au moins un réservoir d'isolement (11) sont connectés à différents réservoirs de stockage comme alimentation de liquide chaud.

6. Appareil (1) selon l'une quelconque des revendications précédentes, dans lequel :

- au moins une chaudière (30) est fournie pour chauffer du liquide à introduire dans le au moins un réservoir de stockage (6) et/ou le au moins un réservoir d'isolement (11) et/ou
- le au moins un réservoir de stockage (6) est au moins partiellement entouré par un réservoir chemisé (27), rempli avec du liquide

dans lequel de préférence le réservoir chemisé (27) est connecté à la au moins une chaudière (30) par l'intermédiaire d'un circuit d'introduction, pour chauffer le liquide, dans lequel le au moins un réservoir de stockage (6) est connecté à la au moins une chaudière (30) par l'intermédiaire d'une alimentation chaude, dans lequel l'alimentation chaude est encore mieux connectée au circuit d'introduction par l'intermédiaire d'une vanne (46) pour diriger un écoulement de liquide chaud (7) dans le réservoir chemisé (27) et/ou le réservoir de stockage (6).

7. Appareil (1) selon l'une quelconque des revendications précédentes, dans lequel le système de contrôle (9) comprend au moins un dispositif d'imagerie (18) et un système d'ordinateur comprenant au moins un algorithme pour une détection d'image de mauvaises herbes sur une surface (3) sur laquelle ledit cadre (5) est positionné, dans lequel le système de contrôle (9) est réglé à au moins des buses individuelles et/ou groupes de buses ouvertes (8) sur la base d'au moins une position de mauvaises herbes (2) détectées, dans lequel de préférence :

- ledit au moins un dispositif d'imagerie (18) est conçu pour une imagerie par infrarouge et imagerie par lumière visible ; et/ou
- au moins deux dispositifs d'imagerie (18) sont fournis, dans lequel au moins un dispositif d'imagerie (18) est conçu pour une imagerie par infrarouge et au moins un dispositif d'imagerie (18) est conçu pour une imagerie par lumière visible, de préférence au moins une imagerie par lumière rouge visible.

8. Appareil (1) selon la revendication 7, dans lequel le système de contrôle (9) comprend au moins un algorithme pour comparer une image d'infrarouge et une image de lumière visible, et pour estimer une nature organique ou inorganique d'un élément transformé en image sur la base de ladite comparaison d'images.

9. Appareil (1) selon l'une quelconque des revendications 7-8, dans lequel le système de contrôle (9) comprend une base de données (20) d'images de différentes mauvaises herbes, dans lequel en comparant une image prise avec ledit au moins un dispositif d'imagerie (18) avec les images dans ladite base de données (20) on peut estimer le type de mauvaises herbes transformées en image, dans lequel le système de contrôle (9) est réglé pour contrôler les buses (8) sur la base d'au moins ladite estimation.

10. Appareil (1) selon l'une quelconque des revendications précédentes, dans lequel le système de contrôle (9) comprend au moins un système de capteur de température (60) pour contrôler la température du liquide chaud (7) dans au moins la au moins une alimentation de buse (10) et le au moins un réservoir d'isolement (11), de préférence de sorte que la température du liquide chaud (7) dans le au moins un réservoir d'isolement (11) est supérieure ou égale à la température du liquide chaud (7) dans la au moins une alimentation de buse (10), encore mieux proche d'une température d'ébullition dudit liquide chaud dans ladite alimentation de buse (10).

11. Procédé pour le contrôle de mauvaises herbes (2) sur une surface (3), dans lequel un cadre (5) est déplacé sur une surface (3), ledit cadre (5) supportant au moins un réservoir de stockage (6) pour du liquide chaud (7) et un système d'alimentation pour alimenter en liquide chaud à partir dudit au moins un réservoir de stockage (6) des buses d'alimentation (8) pour distribuer le liquide chaud (7), dans lequel un système de contrôle (9) est fourni pour contrôler les buses d'alimentation (8), dans lequel au moins une alimentation de buse (10) est fournie entre le au moins un réservoir de stockage (6) et une série de buses d'alimentation (8), introduisant du liquide chaud (7) dans les buses de ladite série de buses.

12. Procédé selon la revendication 11, dans lequel un système d'imagerie (17) est utilisé pour détecter des mauvaises herbes (2) et/ou identifier des mauvaises herbes (2) sur ladite surface (3) et contrôler les buses individuelles (8) ou groupes de buses (8) pour distribuer du liquide chaud (7) sur des mauvaises herbes (2) détectées, de préférence en maintenant les buses (8) fermées aux positions où aucune mauvaise herbe (2) à contrôler n'est détectée.

13. Procédé selon l'une quelconque des revendications 11 ou 12, dans lequel :

- avec ledit au moins un dispositif d'imagerie (18) une image d'infrarouge et une image de lumière visible est prise d'une zone de surface (3) ; et/ou
- au moins deux dispositifs d'imagerie (18) sont utilisés, dans lequel avec au moins un dispositif d'imagerie (18) une image d'infrarouge est prise et avec au moins un dispositif d'imagerie (18) une image de lumière visible est prise, de préférence au moins une image de lumière rouge visible

dans lequel de préférence avec le système de contrôle (9) une image d'infrarouge et une image de lumière visible sont comparées, et sur la base de ladite comparaison d'images la nature organique ou inorganique d'un élément transformé en image est estimée.

14. Procédé selon l'une quelconque des revendications 11-13, dans lequel une image prise avec ledit au moins un dispositif d'imagerie (18) est comparée avec des images dans une base de données (20) qui comprend des images de différentes mauvaises herbes (2), sur la base desquelles on réalise une estimation du type de mauvaise herbe ou de mauvaises herbes transformées en image, dans lequel le système de contrôle (9) est contrôlé pour ouvrir au moins une buse (8) sur la base d'au moins ladite estimation.

15. Procédé selon l'une quelconque des revendications 11-14, dans lequel la au moins une alimentation de buse (10) est au moins partiellement entourée par un réservoir d'isolement (11) à travers lequel réservoir d'isolement (11) du liquide chaud (7) s'écoule.

FIG. 1

FIG. 2

FIG. 3

FIG. 4

FIG. 5A

FIG. 5B

**REFERENCES CITED IN THE DESCRIPTION**

**Patent documents cited in the description**

- GB 2332849 A
- NL 1018458
- EP 1588615 A
- WO 2013093495 A